# EUROPÄISCHE PATENTSCHRIFT

(11) **EP 1 842 601 B1**
(45) Veröffentlichungstag und Bekanntmachung des Hinweises auf die Patenterteilung: **22.07.2009**
(21) Anmeldenummer: 07103712.1
(22) Anmeldetag: 15.12.2003
(51) Int. Cl.: B05D 5/12

(54) **Verfahren zur Ausbildung von Funktionsschichten**
Method for forming functional layers
Méthode pour former des couches fonctionnelles

(30) Priorität: 20.12.2002 DE 10260332; 27.01.2003 WO PCT/EP03/00780
(43) Veröffentlichungstag der Anmeldung: 10.10.2007
(62) Teilanmeldung aus: 03799569.3
(73) Patentinhaber: Ciba Holding Inc., 4057 Basel (CH)
(72) Erfinder: Kunz, Martin, 79588 Efringen-Kirchen (DE); Bauer, Michael, 91301 Forchheim (DE); Baranyai, Andreas, 79423 Heitersheim (DE)

(56) Entgegenhaltungen:
- EP-A- 0 567 835
- FR-A1- 2 670 495
- US-A- 5 403 626

## Beschreibung

Gegenstand der Erfindung ist ein Verfahren zur Ausbildung von Funktionsschichten auf einem anorganischen oder organischen Substrat, sowie ein nach dem Verfahren behandeltes Substrat und dessen Verwendung.

Zur Herstellung von Funktionsschichten auf Oberflächen werden seit einiger Zeit Plasmaverfahren eingesetzt. Insbesondere die Plasmapolymerisation wird in dieser Hinsicht häufig eingesetzt. Dazu werden polymerisierbare Precursoren über die Gasphase einem Niederdruckplasma zugeführt und auf der Oberfläche in polymerisierter Form abgeschieden. Dazu eingesetzte Techniken und die daraus resultierenden Oberfächen sowie ihre Verwendung sind beispielsweise in "Plasma Surface Modification and Plasma Polymerization von N. Inagaki, Technomic Publishing Company Inc., Lancaster 1996", "Plasma Polymerization von H. Yasuda, Academic Press Inc., New York 1985" und "Plasma Polymerization Processes von H. Biederman, Y. Osada, Elsevier Science Publishers, Amsterdam 1992" beschrieben. In US5403626 wird ein Verfahren zur Herstellung eines hydrophilen Polymorfilims offenbart, In welchem der Film mit Hochfrequenzstrahlung vorbehandelt wird.

Die plasmaunterstützte Abscheidung von polymerisierbaren Verbindungen führt häufig zu unvorhersehbaren Änderungen der Strukturen auf molekularer Ebene. Insbesondere wenn funktionelle Gruppen im Molekül vorhanden sind kommt es zu Abbaureaktionen und anderen Veränderungen. Im Plasma können funktionelle Gruppen leicht oxidiert oder abgespalten werden. Zudem können die eingesetzten Moleküle durch die im Plasma vorhandene kurzwellige Strahlung und energiereiche Spezies, wie Ionen und Radikale, völlig zerstört werden. Der abgeschiedene oder polymerisierte Film kann daher viel geringere oder vollständig andere Eigenschaften aufweisen, als die ursprünglich eingesetzten Verbindungen. Um die Struktur weitestgehend zu erhalten werden deshalb vermehrt gepulste Plasmen eingesetzt, wobei nach einem kurzen Plasmapuls zur Initiierung der Polymerisation eine längere Phase folgt, in der das Plasma ausgeschaltet ist, die Zufuhr von polymerisierbaren Verbindungen jedoch aufrecht erhalten wird. Pies hat jedoch eine geringere Effizienz und noch höhere Komplexität des Verfahrens zur Folge. Entsprechende Verfahren werden beispielsweise von G. Kühn et al, in Surfaces and Coatings Technology **142,** 2001, Seite 494 beschreiben.

Darüber hinaus erfordern die genannten Plasmatechniken eine Durchführung im Vakuum und damit aufwendige Apparaturen und zeitraubende Prozeduren. Weiterhin müssen die aufzutragenden oder zu polymerisierenden Verbindungen (Precursoren) verdampft und auf dem Substrat wieder kondensiert werden, was zu hohen thermischen Belastungen und in vielen Fällen zu Zersetzung führen kann. Ausserdem sind die Verdampfungs- und Abscheideraten gering, so dass es schwierig und langwierig ist, Schichten mit einer ausreichenden Dicke zu erzeugen.

DE 19732901 C1, G. Bolte, S. Kluth in Coating 2/98 Seite 38 und G. Bolte, R. Könemann in Coating 10/2001 Seite 364 beschreiben die Verwendung einer Koronabehandlung von Oberflächen bei Atmosphärendruck, wobei die Precursoren in Form von Dämpfen, Aerosolen oder Stäuben in den Entladungsraum eingebracht werden und sich auf den zu behandelnden Oberflächen abscheiden. Auch in diesem Fall werden die Precursoren hohen Energien, UV-Licht und reaktiven Gasen (z.B. Ozon) ausgesetzt, was zur Zerstörung der polymerisierbaren Verbindungen führen kann. Weiterhin ist die Auftragsrate durch die Erzeugungsgeschwindigkeit der Aerosole niedrig und es kann zur Belegung der Elektroden kommen, was eine häufige Reinigung notwendig macht und damit Maschinenstillstände zur Folge hat. Außerdem kann als flüssige Phase nur Wasser eingesetzt werden, was die Auswahl der einsetzbaren Verbindungen und Precursoren stark einschränkt.

Es wurde nun überraschend ein Verfahren gefunden, das die Herstellung von Funktlonsschichten ohne die oben genannten Nachteile ermöglicht. Gegenstand der Erfindung ist ein Verfahren zur Ausbildung von Funktionsschichten auf einem anorganischen oder organischen Substrat, dadurch gekennzeichnet, dass man
a) auf das anorganische oder organische Substrat ein Niedertemperatur-Plasma, eine Corona-Entladung, energiereiche Strahlung und/oder eine Flammbehandlung einwirken läßt,
b) 1) mindestens einen aktivierbaren Initiator oder 2) mindestens einen aktivierbaren Initiator und mindestens eine ethylenisch ungesättigte Verbindung in Form von Schmelzen, Lösung, Suspensionen oder Emulsionen auf das anorganische oder organische Substrat aufbringt, wobei der aktivierbare Initiator und/oder die ethylenisch ungesättigte Verbindung mindestens eine funktionssteuernde Gruppe enthält, die zur Einstellung erwünschter Oberflächeneigenschaften des behandelten Substrats führt und worin die funktionssteuernde Gruppen wie folgt ausgebildet wird:
   vl) eine funktionelle Gruppe, die Einfluß auf die elektrische Leitfähigkeit aufweist, zur Steuerung der antistatischen Eigenschaften, dadurch gekennzeichnet, dass als die die antistatischen Eigenschaften steuernde Gruppe enthaltende Verbindung 2-Diisopropylaminoethylmethacrylat, 3-Dimethylaminoneopentylacrylat, Oleylbis(2-hydroxyethyl)amin, Stearylacrylat und/oder Vinylstearat verwendet wird;
      und
c) das beschichtete Substrat erwärmt und/oder mit elektromagnetischen Wellen unter Einstellung der erwünschten Oberflächeneigenschaften bestrahlt.

Als aktivierbarer Initiator wird vorzugsweise ein Radikalbildender Initiator eingesetzt.

Als Vorteile für dieses Verfahren sind zu nennen: Mit dem beschriebenen Verfahren bilden sich klare transparente Schichten auf einer großen Vielfalt von Substraten, die auch gut haften. In Kombination mit einfach oder mehrfach ethylenisch ungesättigten Verbindungen (Monomeren, Oligomeren oder Polymeren), lassen sich die Eigenschaften der erzeugten Schichten in weiten Bereichen variieren. Die Steuerung der Dicke ist ebenfalls vereinfacht und über sehr weite Bereiche möglich. Vorteilhaft an diesem Verfahren ist, dass es bei Normaldruck durchführ bar ist und keine aufwendigen Vakuumanlagen erforderlich sind. Eine übermäßige thermische Belastung der Substrate und der eingesetzten Substanzen wird vermieden, sodass eine gezielte Einführung von chemischen Funktionalitäten unter Erhalt der Eigenschaften möglich ist. Da konventionelle Auftragsmethoden verwendet werden können, sind die Abscheideraten sehr hoch und praktisch unbegrenzt. Da keine Verdampfung der Substanzen nötig ist, lassen sich auch schwerflüchtige oder hochmolekulare Verbindungen einsetzen. Damit steht eine große Auswahl an Verbindungen zur Wahl und spezifische Eigenschaften lassen sich leicht massschneidern.

Ebenso als Verbindungen mir die antistatischen Eigenschaften steuernden Gruppen sind folgende Substanzen geeignet:

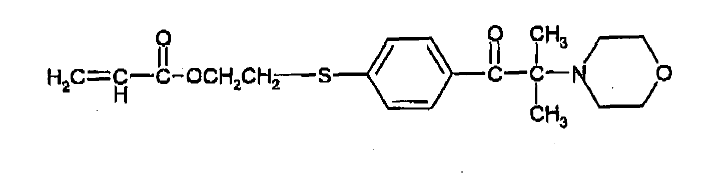

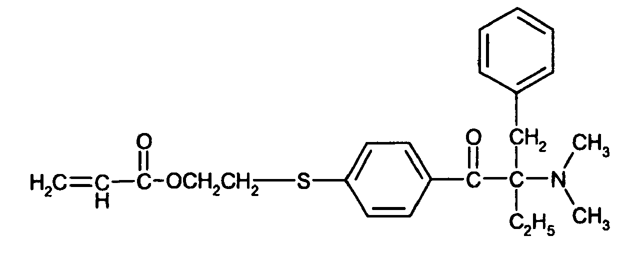

Die Substrate können in Form eines Pulvers, einer Faser, eines Gewebes, eines Filzes, einer Folie oder als dreidimensionales Werkstück vorliegen. Bevorzugte Substrate sind synthetische oder natürliche Polymere, Metalloxide, Gläser, Halbleiter, Quarz oder Metalle oder Materialien, die diese enthalten. Als Halbleitersubstrat ist insbesondere Silizium zu nennen, welches zum Beispiel in Form von "Wavern" vorliegen kann. Als Metalle sind insbesondere Aluminium, Chrom, Stahl, Vanadium, die für die Herstellung hochwertiger Spiegel wie beispielsweise Teleskopspiegel oder Autoscheinwerferspiegel verwendet werden, zu nennen. Besonders bevorzugt ist Aluminium.

Beispiele für natürliche und synthetische Polymere oder Kunststoffe sind nachstehend aufgeführt:
i) Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), (VLDPE) und (ULDPE);
ii) Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE);
iii) Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), ferner Mischungen solcher Copolymere untereinander und mit unter i) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden;
iv) Kohlenwasserstoffharze (z.B. C5-C9) inklusive hydrierte Modifikationen davon (z.B. Klebrigmacherharze) und Mischungen von Polyalkylenen und Stärke;
v) Polystyrol, Poly-(p-methylstyrol), Poly-(α-methylstyrol);
vi) Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und - methacrylat, Styrol-Maleinsäureanhydrid, Styrol-Acrylnitril-Methylacrylat; .
vii) Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; sowie deren Mischungen mit den unter vi) genannten Copolymeren, wie sie z.B. als sogenannte ABS-, MBS-, ASA- oder AES-Polymere bekannt sind;
viii) Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat;
ix) Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile;
x) Copolymere der unter ix) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Co- polymere oder Acryl- nitril-Alkylmethacrylat-Butadien-Terpolymere;
xi) Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen;
xii) Homo- und Copolymere von cyclischen Ethern, wie Polyalkylenglykole, Polyethylenoxyd, Polypropylenoxyd oder deren Copolymere mit Bisglycidylethern;
xiii) Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind;
xiv) Polyphenylenoxide und -sulfide und deren Mischungen mit Styrolpolymeren oder Polyamiden;
xv) Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte;
xvi) Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure;. Block-Copolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme");
xvii) Polyharnstoffe, Polyimide, Polyamid-imide, Polyetherimide, Polyesterimide, Polyhydantoine und Polybenzimidazole;
xviii) Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester;
xix) Polycarbonate und Polyestercarbonate;
xx) Polysulfone, Polyethersulfone und Polyetherketone;
xxi) Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze;
xxii) Trocknende und nicht-trocknende Alkydharze.
xxiii) Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen;
xxiv) Vernetzbare Acrylharze, die sich von substituierten Acrylsäureestern ableiten, wie z.B. von Epoxyacrylaten, Urethan-acrylaten oder Polyester-acrylaten;
xxv) Alkydharze, Polyesterharze und Acrylatharze, die mit Melaminharzen, Harnstoffharzen, Isocyanaten, Isocyanuraten, Polyisocyanaten oder Epoxidharzen vernetzt sind;
xxvi) Vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern wie z.B. Anhydriden oder Aminen mit oder ohne Beschleunigern vernetzt werden;
xxvii) Siliziumhaltige Polymere wie Polysiloxane und Polysilane, sowie deren vernetzte und(oder copolymerisierte Derivate;
xxviii) Natürliche Polymere, wie Cellulose, Naturkautschuk, Gelatine, sowie deren polymerhomolog chemisch abgewandelte Derivate, wie Celluloseacetate, -propionate und - butyrate, bzw. die Celluloseether, wie Methylcellulose; sowie Kolophoniumharze und Derivate;
xxix) Mischungen (Polyblends) der vorgenannten Polymeren, wie z.B. PP/EPDM, Polyamid/-EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/-Acrylat, POM/MBS, PPO/HIPS, PPO/PA 6.6 und Copolymere, PA/HDPE, PA/PP, PA/PPO, PBT/PC/ABS oder PBT/PET/PC.

Bei natürlichen Polymeren sind Kohlefasern, Cellulose, Stärke, Baumwolle, Kautschuk, Kollophonium, Holz, Flachs, Sisal, Polypeptide, Polyaminosäuren und ihre Derivate als besonders bevorzugt zu nennen.

Bevorzugt handelt es sich bei dem synthetischen Polymer um ein Polycarbonat, Polyester, halogenhaltiges Polymer, Polyacrylat, Polyolefin, Polyamid, Polyurethan, Polystyrol und/oder Polyether.

Die Kunststoffe können in Form von Folien, Spritzgussteilen, Extrusionswerkstücken, Fasern, Filzen oder Geweben vorliegen. Neben Bauteilen für die Automobilindustrie können auch Gegenstände wie Brillen oder Kontaktlinsen mit einer Funktionsschicht ausgestattet werden.

Möglichkeiten Plasmen unter Vakuumbedingungen zu erhalten sind vielfach in der Literatur beschrieben worden. Die elektrische Energie kann dabei auf induktivem oder kapazitivem Wege eingekoppelt werden. Es kann sich um Gleichstrom oder Wechselstrom handeln, wobei die Frequenz des Wechselstroms von wenigen kHz bis in den MHz- Bereich variieren kann. Eine Einspeisung im Mikrowellenbereich (GHz) ist ebenfalls möglich. Die Prinzipien der Plasmaerzeugung und Aufrechterhaltung werden zum Beispiel von A. T. Bell, "Fundamentals of Plasma Chemistry" in "Technology and Application of Plasma Chemistry", herausgegeben von J. R. Holahan und A. T. Bell, Wiley, New York (1974) oder von H. Suhr, Plasma Chem. Plasma Process 3(1),1, (1983) beschrieben.

Als primäre Plasmagase können beispielsweise He, Argon, Xenon, N2, O2, H2, Wasserdampf oder Luft verwendet werden. Das erfindungsgemäße Verfahren ist an und für sich nicht empfindlich gegenüber der Einkopplung der elektrischen Energie. Das Verfahren kann im Batch-Betrieb, beispielsweise in einer rotierenden Trommel oder bei Folien, Fasern oder Geweben im kontinuierlichen Betrieb durchgeführt werden. Diese Verfahren sind bekannt und im Stand der Technik beschrieben.

Das Verfahren ist auch unter Corona-Entladungsbedingungen durchführbar. Corona Entladungen werden unter Normaldruckbedingungen erzeugt, wobei als ionisiertes Gas am häufigsten Luft verwendet wird. Prinzipiell sind jedoch auch andere Gase und Mischungen möglich wie z.B. in COATING Vol. 2001, No. 12, 426, (2001) beschrieben. Der Vorteil von Luft als Ionisierungsgas bei Corona Entladungen liegt darin, dass in einer nach außen offenen Apparatur gearbeitet und zum Beispiel eine Folie zwischen den EntladungsElektroden kontinuierlich durchgezogen werden kann. Solche Prozessanordnungen sind bekannt und z. B. in J. Adhesion Sci. Technol. Vol 7, No. 10, 1105, (1993) beschrieben. Dreidimensionale Werkstücke können mit einem Plasmafreistrahl behandelt werden, indem die Konturen unter Zuhilfenahme von Robotern abgefahren werden.

Das Verfahren kann in einem weiten Druckbereich ausgeführt werden, wobei sich die Entladungscharakteristik mit zunehmendem Druck vom reinen Niedertemperatur-Plasma in Richtung Corona Entladung verschiebt und schließlich bei atmosphärischem Druck von ca. 1000-1100 mbar in eine reine Corona Entladung übergeht.

Bevorzugt wird das Verfahren bei einem Prozessdruck von 10-6 mbar bis zu atmosphärischem Druck durchgeführt (1013 mbar), besonders bevorzugt bei atmosphärischem Druck als Corona-Verfahren.

Bevorzugt wird das Verfahren so durchgeführt, dass als Plasmagas ein Inertgas oder ein Gemisch eines Inertgases mit einem Reaktivgas verwendet wird.

Wird eine Corona-Entladung eingesetzt, so wird als Gas bevorzugt Luft, CO₂ und/oder Stickstoff verwendet.

Besonders bevorzugt werden H₂, CO₂, He, Ar, Kr, Xe, N₂, O₂ oder H₂O einzeln oder als Gemisch als Plasmagase verwendet.

Ebenso kann energiereiche Strahlung beispielsweise in Form von Licht, UV-Licht, Elektronen- und Ionenstrahlen zur Aktivierung der Oberfläche eingesetzt werden.

Als aktivierbare Initiatoren kommen alle Verbindungen oder Mischungen von Verbindungen in Frage, die bei Erwärmung und/oder Bestrahlung mit elektromagnetischen Wellen ein oder mehrere Radikale (auch in Form von Zwischenstufen) erzeugen. Dazu gehören neben den meist thermisch aktivierten Verbindungen oder Kombinationen wie beispielsweise Peroxide und Hydroperoxide (auch in Kombination mit Beschleunigern wie z.B. Aminen und/oder Cobaltsalzen), Aminoether (NOR-Verbindungen) auch photochemisch aktivierbare Verbindungen (z.B. Benzoine) oder Kombinationen von Chromphoren mit Co-Initiatoren (z.B. Benzophenon und tert. Amine) oder Mischungen davon. Ebenso sind Sensibilisatoren mit Co-Initiatoren (z.B. Thixanthone mit tert. Aminen) oder Chromophoren (z.B. Thioxanthone mit Aminoketonen) einsetzbar. Redoxsysteme wie beispielsweise die Kombination von H₂O₂ mit Eisen(II)salzen können ebenfalls verwendet werden. Ebenso können Elektronentransfer Paare wie beispielsweise Farbstoffe und Borate und/oder Amine zum Einsatz kommen. Als Initiator kann eine Verbindung oder Kombination von Verbindungen aus den Klassen der Peroxide, Peroxodicarbonate, Persulfate, Benzpinakole, Dibenzyle, Disulfide, Azoverbindungen, Redoxsysteme, Benzoine, Benzilketale, Acetophenone, Hydroxyalkylphenone, Aminoalkylphenone, Acylphosphinoxide, Acylphosphinsulfide, Acyloxyiminoketone, halogenierte Acetophenone, Phenylglyoxalate, Benzophenone, Oxime und Oximester, Thioxanthone, Camphorquinone, Ferrocene, Titanocene, Sulfoniumsalze, Iodoniumsalze, Diazoniumsalze, Oniumsalze, Boralkyle, Borate, Triazine, Bisimidazole, Polysilane und Farbstoffe, sowie entsprechender Coinitiatoren und/oder Sensibilisatoren benutzt werden.

Bevorzugte Verbindungen sind: Dibenzoylperoxid, Benzoylperoxid, Dicumylperoxid, Cumylhydroperoxid, Diisopropylperoxidicarbonat, Methylethylketonperoxid, Bis(4-t-butylcyclohexyl)peroxidicarbonat, Ammoniumperoxomonosulfat, Ammoniumperoxo-disulfat, Dikaliumpersulfat, Dinatriumpersulfat, N,N-Azobisisobutyronitril, 2,2'-azobis(2,4-dimethylpentannitril), 2,2'-azobis(2-methylpropannitril), 2,2'-azobis(2-methylbutannitril), 1,1'-azobis(cyanocyclohexan), tert-Amylperoxobenzoat, 2,2'-Bis(tert-butylperoxy)butan, 1,1'-Bis(tert-butylperoxy)cyclohexan, 2,5-Bis(tert-butylperoxy)-2,5-dimethylhexan, 2,5-Bis(tert-butylperoxy)-2,5-dimethyl-3-hexyn, 1,1-Bis(tert-butylperoxy)-3,3,5-trimethylcyclohexan, tert-Butylhydroperoxid, tert-Butylperacetat, tert-Butylperoxid, tert-Butylperoxybenzoat, tert-Butylperoxyisopropylcarbonat, Cyclohexanonperoxid, Lauroylperoxid, 2,4-Pentandionperoxid, 2,5-di- methyl-2,5-di(tert-butylperoxy) -hexan, Di-(2-tert.-butyl-peroxyisopropyl)-benzol, Cobaltoctanoat, Dicyclopentadienylchrome, Peressigsäure, Benpinakol und Dibenzylderivate wie Dimethyl-2,3-Diphenylbutan, 3,4-Dimethyl-3,4-diphenylhexan, Poly-1,4-di-isopropylbenzol, N,N Dimethyl Cyclohexyl Ammonium Dibutyl Dithiocarbamat, N-tert-butyl-2 benzothioazolesufenamid, Benzothiazyldisulfid und Tetrabenzyl-thiuramdisulfid.

Typische Beispiele für photoaktivierbare Systeme sind nachstehend erwähnt, die sowohl einzeln als auch in Gemischen verwendet werden können. Zum Beispiel Benzophenone, Benzophenonderivate, Acetophenon, Acetophenonderivate, wie beispielsweise α-Hydroxycycloalkylphenylketone oder 2-Hydroxy-2-methyl-1-phenyl-propanon, Dialkoxyacetophenone, α-Hydroxy- oder α-Aminoacetophenone, wie z.B. (4-Methylthiobenzoyl)-1-methyl-1-morpholino-ethan, (4-Morpholino-benzoyl)-1-benzyl-1-dimethylaminopropan, 4-Aroyl-1,3-Dioxolane, Benzoinalkylether und Benzilketale, wie z.B. Benzildimethylketal, Phenylglyoxalate und Derivate davon, dimere Phenylglyoxalate, Monoacylphosphinoxide, wie z.B. (2,4,6-Trimethylbenzoyl)-phenyl-phosphinoxid, Bisacylphosphinoxide, wie z.B. Bis(2,6-dimethoxybenzoyl)-(2,4,4-trimethyl-pent-1-yl)phosphinoxid, Bis(2,4,6-trimethylbenzoyl)phenyl-phosphinoxid oder Bis(2,4,6-trimethylbenzoyl)-(2,4-dipentoxyphenyl)-phosphinoxid, Trisacylphosphinoxide, Ferroceniumverbindungen oder Titanocene, wie beispielsweise (η⁵-2,4-cyclopentadien-1-yl)[1,2,3,4,5,6-η)-(1-methyl ethyl)benzene]iron(+)-hexafluorophosphat(-1) oder Dicyclopentadienyl-bis(2,6-difluoro-3-pyrrolo-phenyl)-titan.

Sulfonium- und Iodoniumsalze wie z.B. Bis[4-(diphenylsulphonio)-phenyl]sulphid bishexafluorophosphat, (4-isobutylphenyl)-p-tolyl-iodonium hexafluorophosphat.
Als Coinitiatoren kommen zum Beispiel Sensibilisatoren in Frage, welche die spektrale Empfindlichkeit verschieben bzw. verbreitern und dadurch eine Beschleunigung der Photopolymerisation bewirken. Dies sind insbesondere aromatische Carbonylverbindungen wie z.B. Benzophenon-, Thioxanthon-, insbesondere auch Isopropylthioxanthon, Anthrachinon- und 3-Acylcumarinderivate, Triazine, Coumarine, Terphenyle, Styrylketone, sowie 3-(Aroylmethylen)-thiazoline, Campherchinon, aber auch Eosin-, Rhodamin- und Erythrosin-Farbstoffe. Als Coinitiatoren sind auch tert. Amine, Thiole, Borate, Phenylglycine, Phosphine und andere Elektrondonatoren einsetzbar.
Bevorzugt kommen Initiatoren zum Einsatz, die ethylenisch ungesättigte Gruppen enthalten, da sie auf diese Weise während des Polymerisationsprozesses in die Polymerkette und damit in die Schicht eingebaut werden. Als ethylenisch ungesättigte Gruppen kommen neben Vinyl- und Vinylidengruppen insbesondere Acrylat-, Methacrylat-, Allyl- und Vinylethergruppen in Frage.

Die ethylenisch ungesättigten Verbindungen können eine oder mehrere olefinische Doppelbindungen enthalten. Sie können niedermolekular (monomer) oder höhermolekular (oligomer, polymer) sein. Durch ihre geschickte Auswahl lassen sich die Eigenschaften der Funktionsschichten in weiten Bereichen steuern. So lassen sich unter Verwendung von wasserlöslichen Verbindungen hydrophile Schichten erzeugen. Unter Verwendung von hydrophoben Verbindungen (beispielsweise fluorierte Verbindungen oder acrylierte Wachse) lassen sich wasserabweisende Schichten herstellen.

Beispiele für Monomere mit einer Doppelbindung sind Alkyl- oder Hydroxyalkyl-acrylate oder -methacrylate, wie z.B. Methyl-, Ethyl-, Butyl-, 2-Ethylhexyl- oder 2-Hydroxyethylacryl-at, Isobornylacrylat, Methyl- oder Ethylmethacrylat. Interessant sind auch Silicon(meth)acrylate und fluorierte Acrylate bzw Methacrylate. Auch Salze oder Hydrochloridaddukte (z.B. Natriumsalz von 3-Sulfopropylacrylat, 2-Aminoethylmethacrylathydrochlorid) von ungesättigten Verbindungen lassen sich einsetzen. Weitere Beispiele sind Acrylnitril, Acrylamid, Methacrylamid, N-substituierte (Meth)acryl-amide, Vinylester wie Vinylacetat, Vinylether wie Isobutylvinylether, Styrol, Alkyl- und Halo-genstyrole, Maleinsäure oder Maleinsäureanhydrid, N-Vinylpyrrolidon, Vinylchlorid oder Vinylidenchlorid. Ebenso sind ungesättigte Verbindungen einsetzbar, die zusätzliche Gruppen tragen, die sauer, neutral oder basisch reagieren (z.B. Allylamin, 2-Aminoethylmethycrylat, 4-Vinylpyridin, Acrylsäure, 2-Propene-1-Sulfonsäure). Auch metallorganische Verbindungen mit ungesättigten Gruppen können eingesetzt werden.

Beispiele für Monomere mit mehreren Doppelbindungen sind Ethylenglykol-, Propylen-glykol, Neopentylglykol-, Hexamethylenglykol- oder Bisphenol-A-diacrylat, 4,4'-Bis(2-acryloyloxyethoxy)-diphenylpropan, Trimethylolpropan-triacrylat, Pentaerythrittriacrylat oder - tetraacrylat, Vinylacrylat, Divinylbenzol, Divinylsuccinat, Diallylphthalat, Triallylphosphat, Trial-lylisocyanurat, Tris(hydroxyethy) isocyanurat-triacrylat oder Tris-(2-acryloylethyl)-isocyanurat.

Beispiele für höhermolekulare (oligomere, polymere) mehrfach ungesättigte Verbindungen sind acrylierte Epoxidharze, acrylierte oder Vinylether- oder Epoxy-Gruppen enthaltende Poly-ester, Polyurethane und Polyether. Weitere Beispiele für ungesättigte Oligomere sind ungesättigte Polyesterharze, die meist aus Maleinsäure, Phthalsäure und einem oder mehreren Diolen hergestellt werden und Molekulargewichte von etwa 500 bis 3000 besitzen. Daneben können auch Vinylether-Monomere und -Oligomere, sowie maleat-terminierte Oligomere mit Polyester-, Polyurethan-, Polyether-, Polyvinylether- und Epoxidhauptketten eingesetzt werden. Insbesondere Kombinationen von Vinylethergruppen tragenden Oligomeren und Polymeren, wie sie in der WO 90/01512 beschrieben sind, sind gut geeignet. Aber auch Copolymere aus Vinylether und Maleinsäure funktionalisierten Monomeren kommen in Frage. Solche ungesättigten Oligomere kann man auch als Prepolymere bezeichnen.

Besonders geeignet sind z.B. Ester von ethylenisch ungesättigten Carbonsäuren und Polyolen oder Polyepoxiden, und Polymere mit ethylenisch ungesättigten Gruppen in der Kette oder in Seitengruppen, wie z. B. ungesättigte Polyester, Polyamide und Polyurethane und Copolymere hiervon, Alkydharze, Polybutadien und Butadien-Copolymere, Polyisopren und Iso-pren-Copolymere, Polymere und Copolymere mit (Meth)Acrylgruppen in Seitenketten, sowie Mischungen von einem oder mehreren solcher Polymerer.

Beispiele für ungesättigte Carbonsäuren sind Acrylsäure, Methacrylsäure, Crotonsäure, Itaconsäure, Zimtsäure, ungesättigte Fettsäuren wie Linolensäure oder Oelsäure. Bevorzugt sind Acryl- und Methacrylsäure.

Als Polyole sind aromatische und besonders aliphatische und cycloaliphatische Polyole geeignet. Beispiele für aromatische Polyole sind Hydrochinon, 4,4'-Dihydroxydiphenyl, 2,2-Di(4-hydroxyphenyl)-propan, sowie Novolake und Resole. Beispiele für Polyepoxide sind solche auf der Basis der genannten Polyole, besonders der aromatischen Polyole und Epichlorhydrin. Ferner sind auch Polymere und Copolymere, die Hydroxylgruppen in der Polymerkette oder in Seitengruppen enthalten, wie z.B. Polyvinylalkohol und Copolymere davon oder Polymethacrylsäurehydroxyalkylester oder Copolymere davon, als Polyole geeignet. Weitere geeignete Polyole sind Oligoester mit Hydroxylendgruppen.

Beispiele für aliphatische und cycloaliphatische Polyole sind Alkylendiole mit bevorzugt 2 bis 12 C-Atomen, wie Ethylenglykol, 1,2- oder 1,3-Propandiol, 1,2-, 1,3- oder 1,4-Butandiol, Pentandiol, Hexandiol,Octandiol, Dodecandiol, Diethylenglykol, Triethylenglykol, Polyethylenglykole mit Molekulargewichten von bevorzugt 200 bis 1500, 1,3-Cyclopentandiol, 1,2-, 1,3- oder 1,4-Cyclohexandiol, 1,4-Dihydroxymethylcyclohexan, Glycerin, Tris-(β-hydroxyethyl)amin, Trimethylolethan, Trimethylolpropan, Pentaerythrit, Dipentaerythrit und Sorbit.

Die Polyole können teilweise oder vollständig mit einer oder verschiedenen ungesättigten Carbonsäuren verestert sein, wobei in Teilestern die freien Hydroxylgruppen modifiziert, z.B. verethert oder mit anderen Carbonsäuren verestert sein können.

### Beispiele für Ester sind:

Trimethylolpropantriacrylat, Trimethylolethantriacrylat, Trimethylolpropantrimethacrylat, Trimethylolethantrimethacrylat, Tetramethylenglykoldimethacrylat, Triethylenglykoldimethacrylat, Tetraethylenglykoldiacrylat, Pentaerythritdiacrylat, Pentaerythrittriacrylat, Pentaerythrittetraacrylat, Dipentaerythritdiacrylat, Dipentaerythrittriacrylat, Dipentaerythrit-tetraacrylat, Dipentaerythritpentaacrylat, Dipentaerythrithexaacrylat, Tripentaerythritocta-acrylat, Pentaerythritdimethacrylat, Pentaerythrittrimethacrylat, Dipentaerythritdimethacrylat, Dipentaerythrittetramethacrylat, Tripentaerythritoctamethacrylat, Pentaerythritdiitaconat, Dipentaerythrittrisitaconat, Dipentaerythritpentaitaconat, Dipentaerythrithexaitaconat, Ethylenglykoldiacrylat, 1,3-Butandioldiacrylat, 1,3-Butandioldimethacrylat, 1,4-Butandioldi-itaconat, Sorbittriacrylat, Sorbittetraacrylat, Pentaerythrit-modifiziert-triacrylat, Sorbittetra-methacrylat, Sorbitpentaacrylat, Sorbithexaacrylat, Oligoesteracrylate und -methacrylate, Glycerindi- und -triacrylat, 1,4-Cyclohexandiacrylat, Bisacrylate und Bismethacrylate von Polyethylenglykol mit Molekulargewicht von 200 bis 1500, oder Gemische davon.

Als Komponente sind auch die Amide gleicher oder verschiedener ungesättigter Carbonsäuren von aromatischen, cycloaliphatischen und aliphatischen Polyaminen mit bevorzugt 2 bis 6, besonders 2 bis 4 Aminogruppen geeignet. Beispiele für solche Polyamine sind Ethylendiamin, 1,2- oder 1,3-Propylendiamin, 1,2-, 1,3- oder 1,4-Butylendiamin, 1,5-Pentylendiamin, 1,6-Hexylendiamin, Octylendiamin, Dodecylendiamin, 1,4-Diaminocyclohexan, Isophorondiamin, Phenylendiamin, Bisphenylendiamin, Di- aminoethylether, Diethylentriamin, Triethylentetramin, Di(β-aminoethoxy)- oder Di(β-aminopropoxy)ethan. Weitere geeignete Polyamine sind Polymere und Copolymere mit gegebenenfalls zusätzlichen Aminogruppen in der Seitenkette und Oligoamide mit Aminoendgruppen. Beispiele für solche ungesättigten Amide sind: Methylen-bis-acrylamid, 1,6-Hexamethylenbis-acryl-amid, Diethylentriamin-tris-methacrylamid, Bis(methacrylamidopropoxy)-ethan, β-Methacryl-amidoethylmethacrylat, N[(β-Hydroxyethoxy)ethyl]-acrylamid.

Geeignete ungesättigte Polyester und Polyamide leiten sich z.B. von Maleinsäure und Diolen oder Diaminen ab. Die Maleinsäure kann teilweise durch andere Dicarbonsäuren ersetzt sein. Sie können zusammen mit ethylenisch ungesättigten Comonomeren, z.B. Styrol, eingesetzt werden. Die Polyester und Polyamide können sich auch von Dicarbon-säuren und ethylenisch ungesättigten Diolen oder Diaminen ableiten, besonders von längerkettigen mit z.B. 6 bis 20 C-Atomen. Beispiele für Polyurethane sind solche, die aus gesättigten oder ungesättigten Diisocyanaten und ungesättigten bzw. gesättigten Diolen aufgebaut sind.

Polybutadien und Polyisopren und Copolymere davon sind bekannt. Geeignete Comonomere sind z.B. Olefine wie Ethylen, Propen, Buten, Hexen, (Meth)-Acrylate, Acryl-nitril, Styrol oder Vinylchlorid. Polymere mit (Meth)-Acrylatgruppen in der Seitenkette sind eben-falls bekannt. Es kann sich z.B. um Umsetzungsprodukte von Epoxidharzen auf Novolak-basis mit (Meth)-Acrylsäure handeln, um Homo- oder Copolymere des Vinylalkohols oder deren Hydroxyalkylderivaten, die mit (Meth)-Acrylsäure verestert sind, oder um Homo- und Copolymere von (Meth)-Acrylaten, die mit Hydroxyalkyl(meth)acrylaten verestert sind.

Besonders bevorzugt wird als einfach oder mehrfach ungesättigte olefinische Verbindung eine Acrylat-, Methacrylat- oder Vinyletherverbindung verwendet. Ganz besonders bevorzugt sind mehrfach ungesättigte Acrylatverbindungen, wie sie vorstehend bereits aufgeführt wurden.

Grundsätzlich gilt, dass es vorteilhaft ist, die Lösungen, Suspensionen oder Emulsionen so rasch wie möglich aufzubringen. Für viele Zwecke kann es aber auch akzeptabel sein, den Schritt b) mit einer zeitlichen Verzögerung durchzuführen. Bevorzugt jedoch wird der Verfahrensschritt b) unmittelbar oder innerhalb von 24 Stunden nach dem Verfahrensschritt a) durchgeführt wird.

Die Aufbringung der Lösungen, Suspensionen oder Emulsionen kann auf unterschiedliche Art und Weise erfolgen. Das Aufbringen kann durch elektrophoretische Abscheidung, Tauchen, Aufsprühen, Aufstreichen, Aufpinseln, Aufrakeln, Aufrollen, Aufwalzen, Aufdrucken, Aufschleudern und Aufgießen geschehen.

In den aufzutragenden Flüssigkeiten sind die Initiatoren in Konzentrationen von 0,01 bis 20%, vorzugsweise von 0,1 bis 5% enthalten. Die ethylenisch ungesättigten Verbindungen können in diesen Flüssigkeiten in Konzentrationen von 0,1 bis 30%, vorzugsweise von 0,1 bis 10% enthalten sein.

Die Flüssigkeiten, können zusätzlich noch andere Stoffe wie z.B. Entschäumer, Emulgatoren, Tenside, Antifoulingmittel, Netzmittel und andere in der Lack- und Farbenindustrie gebräuchliche Zusatzstoffe enthalten.

Die Dicke der aufgetragenen Schicht im trockenen Zustand wird ebenfalls den Erfordernissen der späteren Verwendung angepasst und reicht von einer monomolekularen Schicht bis zu 2mm, vorzugsweise von 2nm bis 1000 µm, besonders bevorzugt 2nm bis 1000nm.

Grundsätzlich ist es vorteilhaft, die Schmelzen, Lösungen, Suspensionen oder Emulsionen so rasch wie möglich zu erwärmen, zu trocknen oder zu bestrahlen, denn durch diesen Schritt wird die Schicht fixiert und stabilisiert. Für viele Zwecke kann es aber auch akzeptabel sein, den Schritt c) mit einer zeitlichen Verzögerung durchzuführen. Bevorzugt jedoch wird der Verfahrensschritt c) unmittelbar oder innerhalb von 24 Stunden nach dem Verfahrensschritt b) durchgeführt.

Zur Erwärmung/Trocknung von Beschichtungen sind vielfältige Möglichkeiten bekannt und sie können alle im beanspruchten Verfahren verwendet werden. So ist beispielsweise der Einsatz von warmen Gasen, IR-Strahlern, Öfen beheizten Walzen und mit Mikrowellen möglich. Die Temperaturen, die dazu verwendetet werden richten sich nach der Temperaturstabilität der eingesetzten Materialien und bewegen sich in der Regel zwischen 0 und 300°C, bevorzugt werden sie zwischen 0 und 200°C liegen.

Beim Vorliegen von besonders temperaturempfindlichen Materialien kann eine Bestrahlung mit elektromagnetischen Wellen vorteilhaft sein. Dabei ist darauf zu achten, dass ein Initiator verwendet wird, der auch in solchen Wellenlängenbereichen absorbiert, in denen der UV-Absorber keine oder nur eine geringe Absorption aufweist. Eine Bestrahlung der Beschichtung kann mit allen Quellen durchgeführt werden, die elektromagnetische Wellen mit Wellenlängen emittieren, welche von den verwendeten Photoinitiatoren absorbiert werden können. Dies sind in der Regel Quellen, die elektromagnetische Strahlung mit Wellenlängen im Bereich von 200 nm bis 2000 nm emittieren. Neben gebräuchlichen Strahlern und Lampen sind auch Laser und LEDs (Light Emitting Diode) einsetzbar. Die Belichtung kann flächig oder partiell erfolgen. Partielle Belichtung ist dann von Vorteil, wenn nur bestimmte Bereiche zur Haftung gebracht werden sollen. Die Bestrahlung kann auch mit Elektronenstrahlen durchgeführt werden. Die Bestrahlung kann flächig und/oder partiell, beispielsweise mittels Belichtung durch eine Maske oder mittels Laserstrahlen, erfolgen. Damit ist es möglich nur in bestimmten Bereichen eine Fixierung und Stabilisierung der Beschichtung zu erzielen. In unbelichteten Bereichen könnte die Schicht wieder abgewaschen und so eine Strukturierung erreicht werden.

Schritt c) kann unter Luft oder unter Inertgas durchgeführt werden. Als Inertgas kommt Stickstoffgas in Frage, aber auch andere Inertgase wie CO₂ oder Argon, Helium etc. oder Mischungen davon können verwendet werden. Entsprechende Anlagen und Geräte sind dem Fachmann bekannt und im Handel erhältlich.

In der Regel verlangt die Erfindung nach Abschluß des Verfahrens nicht das Aufbringen einer weiteren Beschichtung. In Einzelfällen kann es jedoch von Vorteil sein, eine weitere Schicht vorzusehen, z.B eine farbgebende Schicht. Es wird allerdings z.B. das mit Photoinitiator beschichtete Substrat nicht mit einer Zusammensetzung, die mindestens ein ethylenisch ungesättigtes Monomer oder Oligomer enthält, beschichtet und diese Beschichtung mittels UV/VIS-Strahlung gehärtet.

Weiterhin werden Beschichtungen, hergestellt nach einem der vorgehend beschriebenen Verfahren, beansprucht.

Ebenso werden Produkte, die mit einer Beschichtung nach einem der vorhergehenden Ansprüche versehen sind, beansprucht.

Durch das beschriebene Verfahren lassen sich schnell, einfach und flexibel Funktionsschichten erzeugen und ihre Eigenschaften steuern. So ist es beispielsweise möglich, die Hydrophilie bzw. Hydrophobizität oder die Oberflächenspannung der beschichteten Substrate einzustellen. Durch Verwendung von wasserlöslichen bzw. hydrophilen Initiatoren und wasserlöslichen bzw. hydrophilen ethylenisch ungesättigten Verbindungen lassen sich hydrophile Schichten herstellen und das Benetzungsverhalten steuern. Derartige Schichten können beispielsweise als Antifoggingbeschichtung oder zur Verbesserung von Zellhaftung und Wachstum auf den Oberflächen eingesetzt werden. Durch Verwendung von fluorierten ungesättigten Verbindungen oder entsprechenden hydrophoben Monomeren wie beispielsweise Siliconacrylaten lassen sich Antihaft- bzw Antigraffitischichten erzeugen und/oder die Gleit und Reibungseigenschaften kontrollieren.
Durch die Verwendung von ethylenisch ungesättigten Verbindungen, die zusätzliche Gruppen tragen, die sauer, neutral oder basisch reagieren (z.B. Allylamin, 2-Aminoethylmethycrylat, 4-Vinylpyridin, Acrylsäure, 2-Propene-1-Sulfonsäure) lassen sich auch die Säure/Base-Eigenschaften steuern.
Durch Verwendung entsprechender Verbindungen kann der Brechungsindex der Beschichtung eingestellt werden. So kann beispielsweise durch Einsatz von Benzylacrylat ein hoher und durch 1H,1H, 7H-Dodocafluoroheptylmethacrylat ein niedriger Brechungsindex erreicht werden.
Der Einsatz von biologisch aktiven Substanzen kann zur Herstellung von Schichten benutzt werden, die durch Organismen nicht besiedelt bzw. angegriffen werden können. So sind beispielsweise mit Dibutylzinnmaleat Antifoulingschichten herstellbar. Andererseits können durch entsprechende Auswahl der Verbindungen auch Oberflächen erzeugt werden, die die Haftung und das Wachstum biologischer Systeme fördern. Dazu kämen beispielsweise N-Acyloxysuccinimid, 2-methycryloxyethylglucosid, in Frage.

## Patentansprüche

1. Verfahren zur Ausbildung von Funktionsschichten auf einem anorganischen oder organischen Substrat, **dadurch gekennzeichnet, dass** man
a) auf das anorganische oder organische Substrat ein Niedertemperatur-Plasma, eine Corona-Entladung, energiereiche Strahlung und/oder eine Flammbehandlung einwirken läßt,
b) 1) mindestens einen aktivierbaren Initiator oder 2) mindestens einen aktivierbaren Initiator und mindestens eine ethylenisch ungesättigte Verbindung in Form von Schmelzen, Lösung, Suspensionen oder Emulsionen auf das anorganische oder organische Substrat aufbring, wobei der aktivierbare Initiator und/oder die ethylenisch ungesättigte Verbindung mindestens eine funktionssteuernde Gruppe enthält, die zur Einstellung erwünschter Oberflächeneigenschaften des behandelten Substrats führt und worin die funktionssteuernde Gruppe wie folgt ausgebildet wird:
vi) eine funktionelle Gruppe, die Einfluß auf die elektrische Leitfähigkeit aufweist, zur Steuerung der antistatischen Eigenschaften, **dadurch gekennzeichnet, dass** als die die antistatischen Eigenschaften steuernde Gruppe enthaltende Verbindung 2-Diisopropylaminoethylmethacrylat, 3-Dimethylaminoneopentylacrylat, Oleylbis(2-hydroxyethyl)amin, Stearylacrylat und/oder Vinylstearat verwendet wird;
und
c) das beschichtete Substrat erwärmt und/oder mit elektromagnetischen Wellen unter Einstellung der erwünschten Oberflächeneigenschaften bestrahlt,.

2. Verfahren nach Anspruch **1**, **dadurch gekennzeichnet, dass** das anorganische oder organische Substrat ein synthetisches oder natürliches Polymer, ein Metalloxid, ein Glas, ein Halbleiter, Quarz oder ein Metall ist oder enthält.

3. Verfahren nach einem der Ansprüche **1,2, dadurch gekennzeichnet, dass** das organische Substrat ein Homo-, Block-, Graft- und/oder Copolymer und/oder eine Mischung davon ist oder enthält.

4. Verfahren nach einem der Ansprüche **1-3, dadurch gekennzeichnet, dass** das organische Substrat ein Polycarbonat, Polyester, halogenhaltiges Polymer, Polyacrylat, Polyolefin, Polyamid, Polyurethan, Polystyrol, Polyaramid, Polyether, oder Polysiloxan / Silikon ist oder enthält.

5. Verfahren nach einem der Ansprüche **1-4, dadurch gekennzeichnet, dass** der Initiator eine Verbindung oder Kombination von Verbindungen aus den Klassen der Peroxide, Peroxodicarbonate, Persulfate, Benzpinakole, Dibenzyle, Disulfide, Azoverbindungen, Redoxsysteme, Benzoine. Benzilketale, Acetophenone, Hydroxyalkylphenone, Aminoalkylphenone, A-cylphosphinoxide, Acylphosphinsulfide, Acyloxyiminoketone, Peroxyverbindungen, halogenierte Acetophenone, Phenylglyoxylate, Benzophenone, Oxime und Oximester, Thioxanthone, Ferrocene, Titanocene, Sulfoniumsalze, Iodoniumsalze, Diazoniumsalze, Oniumsalze, Borate, Triazine, Bisimidazole, Polysilane und Farbstoffe, sowie entsprechender Coinitiatoren und/oder Sensibilisatoren ist.

6. Verfahren nach einem der Ansprüche **1-5, dadurch gekennzeichnet, dass** der initiator mindestens eine ethylenisch ungesättigte Gruppe, insbesondere Vinyl-, Vinyliden-, Acrylat-, Methacrylat-, Allyl- oder Vinylethergruppe aufweist.

7. Verfahren nach einem der Ansprüche **1-6, dadurch gekennzeichnet, dass** die ethylenisch ungesättigte Verbindung in Form eines Monomeren, Oligomeren und/oder Polymeren eingesetzt wird.

8. Verfahren nach Anspruch **7, dadurch gekennzeichnet, dass** die ethylenisch ungesättigte Verbindung ein mono-, di-, tri-, tetra- oder multi-funktionelles Acrylat, Methacrylat oder Vinylether ist.

9. Verfahren nach einem der Ansprüche **1-8, dadurch gekennzeichnet, dass** als Plasmagas Luft, Wasser, Inertgas, Reaktivgas oder Gemische aus den vorgenannten Gasen verwendet werden.

10. Verfahren nach einem der Ansprüche **1-9, dadurch gekennzeichnet, dass** die im Verfahrensschritt b) eingesetzte Flüssigkeit die Initiatoren in Konzentrationen von 0,01 bis 20%, vorzugsweise von 0,1 bis 5%, enthält.

11. Verfahren nach einem der Ansprüche **1-10, dadurch gekennzeichnet, dass** die im Verfahrensschritt b) eingesetzte Flüssigkeit die ungesättigten Verbindungen in Konzentrationen von 0,1 bis 30%, vorzugsweise von 0,1 bis 10%, enthalten.

12. Verfahren nach einem der Ansprüche **1-11, dadurch gekennzeichnet, dass** die im Verfahrensschritt b) eingesetzten Flüssigkeiten, zusätzlich noch andere Stoffe wie z.B. Entschäumer, Emulgatoren, Tenside, Antifoulingmittel, Netzmittel und andere in der Lackindustrie gebräuchliche Zusatzstoffe enthalten.

13. Verfahren nach einem der Ansprüche **1-12, dadurch gekennzeichnet, dass** die aufgetragene Schicht im trockenen Zustand eine Dicke von einer monomolekularen Schicht bis zu 2 mm, vorzugsweise von 2nm bis 1000 µm, besonders bevorzugt von 2nm bis 1000nm auf weist.

14. Verfahren nach einem der Ansprüche **1-13, dadurch gekennzeichnet, dass** eine Bestrahlung im Verfahrensschritt c) mit Quellen, die elektromagnetische Wellen mit Wellenlängen im Bereich von 200 nm bis 20000 nm emittieren, oder durch Elektronenstrahlen erfolgt, wobei gegebenenfalls ein Trocknungsschritt vorgeschaltet wird.

15. Verfahren nach einem der Ansprüche **1-14, dadurch gekennzeichnet, dass** eine Bestrahlung im Verfahrensschritt c) flächig oder partiell erfolgt.

16. Verfahren nach einem der Ansprüche **1-15, dadurch gekennzeichnet, dass** eine Bestrahlung im Verfahrensschritt c) partiell erfolgt und anschließend unbelichtetes Material entfernt wird.

17. Substrate mit Funktionsschichten, erhältlich nach einem Verfahren gemäß einem der Ansprüche **1-16.**

18. Produkte, die mit einer Beschichtung erhältlich nach einem Verfahren gemäss einem der Ansprüche **1-15** versehen sind.

19. Verwendung der Funktionsschicht erhältlich nach einem Verfahren gemäss einem der Ansprüche **1-15** zur Einstellung der antistatischen Eigenschaften.

## Claims

1. A method for forming a functional layer on an inorganic or organic substrate, **characterized in that**
a) a low-temperature plasma, a corona discharge, high-energy radiation and/or a flame treatment is caused to act on the inorganic or organic substrate,
b) 1) at least one activatable initiator or 2) at least one activatable initiator and at least one ethylenically unsaturated compound is/are applied in the form of a melt, solution, suspension or emulsion to the inorganic or organic substrate, there being incorporated in the activatable initiator and/or the ethylenically unsaturated compound at least one function-controlling group which results in the treated substrate's acquiring desired surface properties,
wherein the function-controlling group is composed as follows
vi) a functional group having an effect on electrical conductivity, for controlling anti-static properties, **characterized in that** as a group controlling anti-static properties there is used 2-diisopropylaminoethyl methacrylate, 3-dimethylaminoneopentyl acrylate, oleylbis(2-hydroxyethyl)amine, stearyl acrylate and/or vinyl stearate;
and
c) the coated substrate is heated and/or is irradiated with electromagnetic waves, the substrate thereby acquiring the desired surface properties.

2. A method according to claim **1, characterized in that** the inorganic or organic substrate is or comprises a synthetic or natural polymer, a metal oxide, a glass, a semi-conductor, quartz or a metal.

3. A method according to anyone of claims **1-2, characterized in that** the organic substrate is or comprises a homopolymer, block polymer, graft polymer and/or copolymer and/or a mixture thereof.

4. A method according to anyone of claims **1-3, characterized in that** the organic substrate is or comprises a polycarbonate, polyester, halogen-containing polymer, polyacrylate, polyolefin, polyamide, polyurethane, polystyrene, polyaramide, polyether or polysiloxane / silicone.

5. A method according to anyone of claims **1-4, characterized in that** the initiator is a compound or combination of compounds from the classes of the peroxides, peroxodicarbonates, persulfates, benzpinacols, dibenzyls, disulfides, azo compounds, redox systems, benzoins, benzil ketals, acetophenones, hydroxyalkylphenones, aminoalkylphenones, acylphosphine oxides, acylphosphine sulfides, acyloxyiminoketones, peroxy compounds, halogenated acetophenones, phenyl glyoxylates, benzophenones, oximes and oxime esters, thioxanthones, ferrocenes, titanocenes, sulfonium salts, iodonium salts, diazonium salts, onium salts, borates, triazines, bisimidazoles, polysilanes and dyes, and also corresponding coinitiators and/or sensitisers.

6. A method according to anyone of claims **1-5, characterized in that** the initiator has at least one ethylenically unsaturated group, especially a vinyl, vinylidene, acrylate, methacrylate, allyl or vinyl ether group.

7. A method according to anyone of claims **1-6, characterized in that** the ethylenically unsaturated compound is used in the form of a monomer, oligomer and/or polymer.

8. A method according to claim **7, characterized in that** the ethylenically unsaturated compound is a mono-, di-, tri-, tetra- or poly-functional acrylate, methacrylate or vinyl ether.

9. A method according to anyone of claims **1-8, characterized in that** as the plasma gas there is used air, water, inert gas, reactive gas or a mixture of the afore-mentioned gases.

10. A method according to anyone of claims **1-9, characterized in that** the liquid used in method step b) contains the initiator(s) in a concentration of from 0.01 to 20 %, preferably from 0.1 to 5 %.

11. A method according to anyone of claims **1-10, characterized in that** the liquid used in method step b) contains the unsaturated compound(s) in a concentration of from 0.1 to 30 %, preferably from 0.1 to 10 %.

12. A method according to anyone of claims **1-11, characterized in that** the liquids used in method step b) additionally comprise other substances, for example defoamers, emulsifiers, surfactants, anti-fouling agents, wetting agents and other additives customarily used in the coatings industry.

13. A method according to anyone of claims **1-12, characterized in that** the thickness of the applied layer in the dry state ranges from a monomolecular layer up to 2 mm, preferably from 2 nm to 1000 µm, especially from 2 nm to 1000 nm.

14. A method according to anyone of claims **1-13, characterized in that** in method step c) irradiation is carried out using sources which emit electromagnetic waves of wavelengths in the range from 200 nm to 20 000 nm or by means of electron beams, optionally preceded by a drying step.

15. A method according to anyone of claims **1-14, characterized in that** in method step c) irradiation is effected over the whole area or parts thereof.

16. A method according to anyone of claims **1-15, characterized in that** in method step c) partial irradiation is effected and unexposed material is then removed.

17. A substrate having a functional layer, obtainable by a method according to anyone of claims **1-16.**

18. Products that have been provided with a coating in accordance with any one of claims **1-15.**

19. The use of a functional layer obtainable according to the method according to any one of claims **1-15** for adjusting the anti-static properties.

## Revendications

1. Procédé pour former des couches fonctionnelles sur un substrat inorganique ou organique, **caractérisé en ce que**
a) l'on laisse agir sur le substrat inorganique ou organique un plasma à basse température, une décharge par effet corona, une radiation à haute énergie et/ou un traitement par flamme,
b) l'on applique 1) au moins un initiateur activable ou 2) au moins un initiateur activable et au moins un composé éthyléniquement insaturé en forme de masses fondues, de solution, de suspensions ou d'émulsions sur le substrat inorganique ou organique, sachant que l'initiateur activable et/ou le composé éthyléniquement insaturé contient au moins un groupe commandant une fonction, qui conduit à l'établissement de propriétés superficielles désirées du substrat traité et dans lesquels le groupe commandant la fonction est constitué comme suit :
vi) un groupe fonctionnel qui possède une influence sur la conductivité électrique, pour la commande des propriétés antistatiques, **caractérisé en ce que**, en tant que composé contenant le groupe commandant les propriétés antistatiques, on utilise du 2-diisopropylaminoéthylméthacrylate, du 3-diméthylaminoneopentylacrylate, de la oléyl-bis(2-hydroxyéthyl)amine, de l'acrylate de stéaryle et/ou un stéarate de vinyle.
et
c) on réchauffe le substrat revêtu et/ou on l'expose à des ondes électromagnétiques moyennant le réglage des propriétés superficielles souhaitées.

2. Procédé selon la revendication 1, **caractérisé en ce que** le substrat inorganique ou organique est ou contient un polymère naturel ou synthétique, un oxyde métallique, un verre, un semi-conducteur, du quartz ou un métal.

3. Procédé selon l'une quelconque des revendications 1 et 2, **caractérisé en ce que** le substrat organique est ou contient un homopolymère, un polymère séquencé, un polymère greffé (« graft ») et/ou un copolymère et/ou un mélange de ces derniers.

4. Procédé selon l'une quelconque des revendications 1 à 3, **caractérisé en ce que** le substrat organique est ou contient un polycarbonate, un polyester, un polymère halogéné, un polyacrylate, une polyoléfine, un polyamide, un polyuréthanne, un polystyrène, un polyaramide, un polyéther ou un polysiloxane / une silicone.

5. Procédé selon l'une quelconque des revendications 1 à 4, **caractérisé en ce que** l'initiateur est un composé ou une combinaison de composés de la classe des peroxydes, des peroxodicarbonates, des persulfates, des benzopinacols, des dibenzyles, des disulfures, des composés azotés, des systèmes redox, des benzoïnes, des benzylcétals, des acétophénones, des hydroxyalkylphénones, des aminoalkylphénones, des oxydes et des sulfures d'acylphosphines, des acyloxyiminocétones, des composés peroxydés, des acétophénones halogénées, des glycoxylates de phényle, des benzophénones, des oximes et des esters d'oximes, des thioxanthanes, des ferrocènes, titanocènes, des sels de sulfonium, des sels d'iodonium, des sels de diazonium, des sels d'onium, des borates, des triazines, des bisimidazoles, des polysilanes et des colorants, ainsi que des coinitiateurs et/ou des sensibilisateurs correspondants.

6. Procédé selon l'une quelconque des revendications 1 à 5, **caractérisé en ce que** l'initiateur comporte au moins un groupe éthyléniquement insaturé, en particulier un groupe vinyle, vinylidène, acrylate, méthacrylate, allyle ou éther vinylique.

7. Procédé selon l'une quelconque des revendications 1 à 6, **caractérisé en ce que** le composé éthyléniquement insaturé est mis en oeuvre sous la forme d'un monomère, d'un oligomère et/ou d'un polymère.

8. Procédé selon la revendication 7, **caractérisé en ce que** le composé éthyléniquement insaturé est un acrylate, un méthacrylate ou un éther vinylique mono-, di-, tri-, tétra- ou multifonctionnel.

9. Procédé selon l'une quelconque des revendications 1 à 8, **caractérisé en ce que** comme gaz plasmagène, de l'air, de l'eau, un gaz inerte, un gaz réactif ou des mélanges des gaz précités sont utilisés.

10. Procédé selon l'une quelconque des revendications 1 à 9, **caractérisé en ce que** le liquide mis en oeuvre dans l'étape de procédé b) contient les initiateurs dans des concentrations de 0,01 à 20 %, de préférence de 0,1 à 5 %.

11. Procédé selon l'une quelconque des revendications 1 à 10, **caractérisé en ce que** le liquide mis en oeuvre dans l'étape de procédé b) contient les composés insaturés dans des concentrations de 0,1 à 30 %, de préférence de 0,1 à 10 %.

12. Procédé selon l'une quelconque des revendications 1 à 11, **caractérisé en ce que** les liquides mis en oeuvre dans l'étape de procédé b) contiennent encore en plus d'autres produits comme par exemple des antimousses, des émulsionnants, des tensioactifs, des agents antipourriture, des mouillants et d'autres additifs utilisés dans l'industrie des peintures.

13. Procédé selon l'une quelconque des revendications 1 à 12, **caractérisé en ce qu'**à l'état sec, la couche appliquée présente une épaisseur d'une couche monomoléculaire à 2mm, de préférence de 2nm à 1000 µm, de façon particulièrement préférée de 2 nm à 1000 nm.

14. Procédé selon l'une quelconque des revendications 1 à 13, **caractérisé en ce qu'**une exposition dans l'étape de procédé c) avec des sources qui émettent des ondes électromagnétiques avec des longueurs d'onde dans l'intervalle de 200 à 20000 nm, ou par un faisceau d'électrons, sachant qu'une étape de séchage est intercalée en amont le cas échéant.

15. Procédé selon l'une quelconque des revendications 1 à 14, **caractérisé en ce qu'**une exposition à l'étape de procédé c) s'effectue sur la surface ou partiellement.

16. Procédé selon l'une quelconque des revendications 1 à 15, **caractérisé en ce qu'**une exposition à l'étape de procédé c) s'effectue partiellement et qu'ensuite, le matériau non exposé est retiré.

17. Substrat avec des couches fonctionnelles, réalisable d'après un procédé selon l'une quelconque des revendications 1 à 16.

18. Produits qui sont dotés d'un revêtement réalisable d'après un procédé selon l'une quelconque des revendications 1 à 15.

19. Utilisation de la couche fonctionnelle réalisable d'après un procédé selon l'une quelconque des revendications 1 à 15 pour ajuster des propriétés antistatiques.
